# EUROPÄISCHE PATENTSCHRIFT

(11) **EP 2 292 704 B1**
(45) Veröffentlichungstag und Bekanntmachung des Hinweises auf die Patenterteilung: **28.08.2013**
(21) Anmeldenummer: 10009224.6
(22) Anmeldetag: 06.09.2010
(51) Int. Cl.: C09D 7/12, C09G 3/00, C10M 171/06, A63C 5/056

(54) **Gleitmittel für Wintersportgeräte mit verbesserten tribologischen Gleiteigenschaften und längerer Gebrauchsdauer, Verfahren zur Herstellung und Anwendung**
Lubricant for winter sport devices with improved tribological friction characteristics and longer life, method for producing same and use
Lubrifiant pour équipements de sport d'hiver doté de propriétés de glissement tribologiques améliorées et d'une durée d'utilisation prolongée, procédé de fabrication et d'application

(30) Priorität: 04.09.2009 DE 102009040105
(43) Veröffentlichungstag der Anmeldung: 09.03.2011
(73) Patentinhaber: ZIPPS Skiwachse GmbH, 65620 Fussingen (DE)
(72) Erfinder: Zipp, Frank, 65620 Fussingen (DE); Herber, Jürgen, Dr., 35396 Gießen (DE)
(74) Vertreter: Sprenger, Gerrit Lars Eike

(56) Entgegenhaltungen:
- WO-A1-99/50367
- DE-A1-102006 047 302
- DE-U1-202006 008 755

## Beschreibung

Die vorliegende Erfindung betrifft die Verwendung von nanomeren Kohlenstoffröhrchen (CNT: carbon nanotubes) in Substanz oder als eine Komponente von Gleitmitteln, im folgenden Skiwachse genannt, für Gleitflächen von Wintersportgeräten auf Schnee sowie Verfahren zur Herstellung der Skiwachse als auch die Anwendung als Beschichtung der Gleitflächen von Wintersportgeräten mit den erfindungsgemäßen Skiwachsen.

Die Faktoren, die das Gleiten von Wintersportgeräten auf einer Schneeoberfläche beeinflussen, sind bis heute nicht vollständig verstanden. Empirisch findet man, dass zur Erzielung bestmöglicher Gleiteigenschaften von Wintersportgeräten für alpine oder nordische Wintersportarten, Skisprung ,Snowboards, Skiboards sowie Schlitten auf unterschiedlichen Schneearten es einer Oberflächenbehandlung der Gleitflächen, die direkt mit dem schneebedeckten Untergrund in Berührung kommen, bedarf. Diese Oberflächenbehandlung wird allgemein als wachsen bezeichnet, die dafür verwendeten Stoffe oder Mischungen werden allgemein als Skiwachs bezeichnet, auch wenn es sich dabei nicht zwangsläufig um ein Wachs mit wachsartiger Konsistenz im herkömmlichen Sinne handeln muss.

Überraschenderweise wurde empirisch ermittelt, dass CNTs gleitverbessernde und die Gebrauchsdauer erhöhenden Eigenschaften für flüssige, pastöse oder feste Skiwachse bereitstellen. Die auf mindestens einen Teil der Gleitfläche von Wintersportgeräten, die in direktem Kontakt mit der Schneeoberfläche stehen, aufgebrachten Skiwachse dienen in den meisten Fällen der Verbesserung der tribologische Gleiteigenschaften auf Schnee.

Eine Verbesserung der tribologischen Gleiteigenschaften von Wintersportgeräten wird generell dann erzielt, wenn die Reibung zwischen Gleitfläche und der Schneeoberfläche so weit als möglich reduziert wird.

In Abhänigkeit von den Schneebedingungen (alter oder neuer Kunst- oder Naturschnee, feuchter oder trockener Kunst- oder Naturschnee, Pulverschnee oder fallender, feuchter oder trockener Neuschnee als spezielle Formen des Naturschnees) und der Kristallform sowie Korngröße des Schnees finden wir in der Praxis die Situation vor, dass dadurch die Gleiteigenschaften der Wintersportgeräte sehr
unterschiedlich sind. Weiterhin üben meteorologische Parameter wie Luftfeuchtigkeit, Feuchtigkeit des Schnees, Luft- und Schneetemperatur, Wind und Sonneneinstrahlung sowie Luftdruck wesentlichen Einfluss auf die Schneeeigenschaften und damit auf die Gleiteigenschaften des Wintersportgerätes aus. Abschließend müssen noch die Pistenbedingungen (Härte der Piste, Trasse oder Spur, die Dichte des Schnees und der freie Wassergehalt des Schnees) als wesentliche Einflussgrößen beachtet werden. Durch den Auftrag einer oder mehrerer lagen von Skiwachs versucht man, die Gleiteigenschaften des Wintersportgerätes für die jeweiligen Bedingungen zu optimieren. Die empirische Erfahrung zeigt, dass je kälter oder körniger der Schnee ist, desto härter sollte das Wachs sein, bei feuchtem und nassem Schnee sollte das Wachs weicher sein. Die Körnigkeit des Schnees beeinflußt die Reibung und damit die Schnelligkeit des Abriebs des Skiwachses von der Skigleitfläche, die Schneefeuchtigkeit die Gleiteigenschaften des Wintersportgerätes durch Saugeffekte. Es kann vorkommen, dass ein Schnee sehr feucht ist, aber gleichzeitig harte und scharfe Kristalle aufweist.

Physikalisch korrekt müßte man verschiedenste Reibungsarten wie fest/fest-Reibung, fest/flüssig-Reibung, flüssig-flüssig-Reibung, fest-gasförmig und flüssig/gasförmige Reibungsanteile berücksichtigen, die je nach Schnee- und Witterungsbedingungen unterschiedliche Anteile an der Gesamtreibung aufweisen und darüber hinaus graduell ineinander übergehen beziehungsweise nebeneinander vorliegen. Vereinfacht wird heute für die Erklärung des Gleitverhaltens eines Wintersportgerätes auf einer Schneeoberfläche die mehr oder weniger starke Bildung eines Wasserfilms angenommen, der beim Gleiten über die Schneeoberfläche durch die Reibungswärme entsteht und der sich zwischen Gleitfläche und Schneeoberfläche befindet. Angaben für die Dicke eines solchen Schmelzwasserfilms schwanken je nach Witterungsbedingungen und Messverfahren zwischen 2 - 40 µm.

Es wird angenommen, dass bei Schneetemperaturen oberhalb von -15°C immer dann geringe Gleitreibung auftritt, wenn ein möglichst konstanter dünner Wasserfilm durch die Gleitreibung erzeugt wird. Das Wintersportgerät gleitet dann zumindest partiell auf diesem Wasserfilm. Es wird ferner angenommen, dass bei einer Zunahme des Wasserfilms, zum Beispiel bei wärmeren und feuchteren Bedingungen, das durch die Gleitreibung entstehende Schmelzwasser nicht mehr genügend abgeführt werden kann, ein Saugeffekt entsteht, der gleitvermindernd wirkt.

Generell wird somit angenommen, dass eine bestmögliche Wasserabführung von der Oberfläche der Gleitfläche der Wintersportgeräte eine Minimierung der Gleitreibung bewirkt, ohne dabei eine Mindestschmelzwasserfilmdicke zu unterschreiten. Aus diesem Grunde wird allgemein die Gleitfläche der Wintersportgeräte durch die Skiwachse hydrophobiert, um so die Schmelzwasserabführung zu beschleunigen. In der Praxis findet man jedoch, dass stark hydrophobe Skiwachse nicht unter allen
Bedingungen die besten Ergebnisse liefern. So wird empirisch gefunden, dass unter trockenkalten Bedingungen stark hydrophobierende Skiwachse keine optimalen Ergebnisse liefern.

Auch bei Schneetemperaturen unter -15°C wird ebenfalls die, wenn auch geringe, Bildung eines Schmelzwasserfilms diskutiert. In der Praxis hat man es mit ständig wechselnden Schneebeschaffenheiten zu tun und daher ist es bis heute auch noch nicht gelungen, ein Skiwachs bereitzustellen, das auf allen Schneearten und bei allen vorkommenden Witterungsbedingungen zu einer höchstmöglichen Minimierung der Gleitreibung führt.

In ungünstigsten Fällen kann es vorkommen, dass in feuchtem Schnee die Gleitflächen der Wintersportgeräte, die in direktem Kontakt mit dem Schnee stehen, Schnee- oder Eisanhaftungen zeigen und somit keine Gleitfläche im ursprünglichen Sinn des Wortes mehr bereitstellen. Hier verbleibt zuviel Wasser auf der Gleitfläche und friert an. In der Praxis findet man diesen Sachverhalt oftmals bei nordischen Sportarten unter Neuschneebedingungen um 0°C und hoher Schneefeuchtigkeit. In einem anderen Fall kann es bei hartem, möglicherweise teilweise vereisten Schnee dazu kommen, dass durch das Abbrechen der harten Eiskristalle beim Überfahren die Gleitwirkung des aufgebrachten Skiwachses schnell nachlässt, da durch einen nunmehr auftretenden starken mechanischen Abtrag des Gleitmittels von der Gleitfläche des Wintersportgerätes keine ausreichende Langzeitwirkung der Schmelzwasserableitung mehr erzielt werden kann. Hier muss das Skiwachs neben der Schmelzwasserableitung eine hohe Widerstandsfähigkeit gegen mechanischen Abtrag aufweisen. Nun könnte man annehmen, dass ein hartes Skiwachs generell die beste Lösung ist, denn bei weichen Bedingungen ist der mechanische Abtrag gegenüber hartem Schnee vermindert und das Skiwachs kann seine Gleitwirkung entsprechend länger ausüben. Die Praxis zeigt jedoch, dass harte Skiwachse unter weichen Bedingungen keine optimale Lösung darstellen.

Ein großer Teil der Wintersportler findet sich nach dem heutigen Stand der Technik damit ab, dass sein Wintersportgerät je nach Schneebeschaffenheit stark unterschiedliche Gleiteigenschaften aufweist und die Dauergebrauchseigenschaften in weiten Grenzen variieren. Unter Wettkampfbedingungen und im ambitionierten Hobbysport kann man sich mit einer scheinbar nur von den Schneebedingungen abhängigen Gleitleistung der jeweiligen Wintersportgeräten nicht zufrieden geben.

Die natürlich vorhandenen großen Unterschiede der Schneearten, die sich im Wesentlichen aus der natürlichen Abfolge der Witterungsbedingungen ergeben, erfordern vor allen im Wettkampfsport eine ständige Anpassung des Skiwachses an die aktuellen Bedingungen. Wettkämpfe werden heute im Bereich von hundertstel Sekunden entschieden und damit erhalten Faktoren wie das Material und Konstruktion der Wintersportgeräte, Kleidung, sportartspezifische Technik, die Gleitfläche an sichsowie deren Wachsung einen immer größeren Stellenwert. Die Gleitfäche von Wintersportgeräten, die vornehmlich aus Polyethylen mit gegebenenfalls weiteren Komponenten wie Ruß, Graphit, fluoriertem Graphit, anorganische Komponenten oder weiteren organischen Polymeren besteht, wird durch die Hersteller bereits mit einer dem Anwendungszeck geeigneten, mechanisch erzeugten Rillenstruktur versehen. Diese dient dem Zweck, bestmögliche Strömungsverhältnisse und Schmelzwasserableitung beim Gleiten auf Schnee zu ermöglichen. Unter Wettkampfbedingungen reichen die mit einer Rillenstruktur versehenen Gleitflächen ohne zusätzliches Aufbringen eines oder mehrerer Skiwachse in ihrem Leistungsvermögen jedoch bei weitem nicht aus, die Rillenstruktur erzeugt erst in Kombination mit einem Skiwachs bestmögliche Ergebnisse. Zur bestmöglichen Ausnutzung des Leistungspotentials eines Wintersportgerätes muss daher nach dem Auftragen einer ein- oder mehrlagigen Skiwachsschicht die damit versehene Gleitfläche von überschüssigem Wachs befreit werden und mechanisch, meist über Bürsten, nachbearbeitet werden, damit die ursprüngliche Rillenstruktur wieder hergestellt wird und die gewachste Gleitfläche die Rillenstruktur bestmöglich abbildet. Erst das Zusammenwirken der mechanisch erzeugten Rillenstruktur und des Skiwachses ergibt die bestmögliche Reibungsreduzierung der Wintersportgeräte. Die sich ständig verändernden Schneeeigenschaften erzeugten daher eine Nachfrage nach sehr vielen verschiedenen Skiwachsen, die, bezogen auf die einzelnen Schneebedingungen und Wintersportarten, im gegenseitigen Wettbewerb stehen. Da die optimale Anpassung des Skiwachses an die Schneebedingungen eine der wesentlichen Voraussetzungen für einen Erfolg im Wettkampf darstellt, besteht ein ständiger Bedarf an verbesserter Leistungsfähigkeit der tribologischen Gleiteigenschaften sowie der Dauergebrauchsfähigkeit. Für den Breitensport und den ambitionierten Hobbysportler ist es weiterhin wünschenswert, auf möglichst vielen Schneearten und Witterungsbedingungen bestmögliche Ergebnisse zu erzielen und den Präparierungsaufwand durch das Aufbringen von Skiwachs zu minimieren. Unerfahrenere Wintersportler können damit in die Lage versetzt werden, bessere Gleitfähigkeit ihrer Wintersportgeräte mit größerer Unabhänigkeit von der Schneebeschaffenheit zu erreichen. Wünschenswert ist also neben der Bereitstellung bestmöglicher Gleiteigenschaften und einer langen Dauergebrauchsfähigkeit eine stärkere Unabhänigkeit von den jeweiligen, auf den Witterungsbedingungen beruhenden, Schneeeigenschaften.

Wie erwähnt, muss es sich bei einem Skiwachs nicht unbedingt um ein Wachs im herkömmlichen Sinne handeln. Heutige Skiwachse liegen in flüssiger, pastöser oder fester, meist wachsartiger Form sowie pulverförmig mit unterschiedlichen Lösemittelanteilen vor.

In flüssiger Form kann der Auftrag auf die Gleitfläche mittels Schwamm, Lappen oder Vlies sowie als Sprühauftrag, dann meist Sprühwachs genannt, erfolgen. In fester Form kann dies durch Aufreiben, oder Aufschmelzen (Heißwachs) erfolgen. Meist schließt sich eine besonderen Form des Aufpressens, das Einkorken, an, wobei das Wintersportgleitmittel durch Druck und entstehender Reibungswärme mechanisch in die Gleitfläche eingedrückt wird.

Pulverförmige Skiwachse können durch Einbügeln oder Einkorken von Hand oder maschinell appliziert werden. Auch eine Kombination der verschiedenen Arbeitsverfahren ist üblich. Generell gilt für alle Skiwachse, dass die Leistungsfähigkeit hinsichtlich der reibungsvermindernden Eigenschaften nicht allein auf der Zusammensetzung des Skiwachses beruhen, sondern ebenfalls in der mechanischen Präparation der Gleitfläche.

Für die Aufbringung der erfindungsgemäßen offenen CNTs auf die Gleitfläche von Wintersportgeräten kommen bei einer einschichtigen Aufbringung zwei Möglichkeiten in Betracht:

Erstens können die offenen CNTs als Komponente in das Skiwachs eingearbeitet und in dieser Mischung auf die Gleitfläche aufgetragen werden. Im Falle einer flüssigen oder pastösen Mischung kann dies durch sprühen, streichen, wischen oder reiben durchgeführt werden, im Falle eines festen und/oder pulverförmigen Skiwachses durch Aufreiben, Aufpressen oder Aufschmelzen.

Weiterhin besteht die Möglichkeit, die offenen CNTs als Stoff an sich in fester Form oder in Dispersion aufzutragen. Hierbei muss sich eine anschließende mechanische Bearbeitung durch Aufreiben oder Aufpressen anschließen, um den Verbund mit der Gleitfläche sicherzustellen, die möglicherweise zuvor bereits mit mindestens einer Lage eines Skiwachses vorbeschichtet wurde. Die Gleitfläche an sich kann die erfindungsgemäße Komponente ebenfalls enthalten.

Im Falle eines mehrlagigen Auftrags (Mehrschichtauftrag) von Skiwachsen auf die Gleitfläche von Wintersportgeräten ist es nicht erforderlich, dass jede Lage des Gleitmittels offene CNTs beinhaltet. Wir können folgende Fälle für einen zweilagigen Aufbau unterscheiden :
1. Es wird eine Grundschicht direkt auf die Gleitfläche aufgetragen. Diese Grundschicht beinhaltet die erfindungsgemäßen offenen CNTs als Teil der Gesamtmischung der Grundschicht und diese Mischung kann vor der Aufbringung flüssig, pastös, fest oder pulverförmig vorliegen. Die Grundschicht dient als Vorbeschichtung für eine nachfolgende Beschichtungslage, die auf diese Grundschicht aufgetragen wird. Diese Vorgehensweise ist an sich bekannt und stellt keinen neuen Aspekt dar. Die Grundschicht kann dabei sowohl in getrockenter und gegebenenfalls bereits mechanisch nachbehandelten Form, um die Rillenstruktur der Gleitfläche bestmöglich abzubilden, mit der den Beschichtungsabschluß bildenden Deckschicht überschichtet werden, die dann möglicherweise ebenfalls noch einmal mechanisch nachbehandelt wird. Die Deckschicht kann in flüssiger, pastöser, fester oder pulverartiger Form vorliegen. Möglich ist auch, die den Beschichtungsabschluß bildende Schicht im Falle einer flüssigen oder pastösen Grundschicht auf die nicht getrocknete oder nur teilgetrocknete Grundschicht aufzutragen und nach der Trocknung der Gesamtbeschichtung diese gegebenenfalls mechanisch zu bearbeiten. Die erfindungsgemäßen offenen CNTs müssen in mindestens einer der Schichten anwesend sein.
2. Die erfindungsgemäßen offenen CNTs werden auf eine vorher aufgebrachte Grundschicht, die die erfindungsgemäßen offenen CNTs als Teil der Gesamtmischung ebenfalls beinhalten kann und gegebenenfalls bereits mechanisch nachbehandelt wurde, in Substanz als Feststoff oder Dispersion aufgebracht und durch Aufreiben und/oder Aufpressen mit der bereits vorhandenen Grundschicht verbunden werden. Ebenfalls ist es möglich, die erfindungsgemäßen offenen CNTs mit einer bereits vorhandenen Grundschicht über Aufschmelzen der Gesamtbeschichtung zu verbinden. Diese Gesamtbeschichtung kann dann ebenfalls nochmals mechanisch bearbeitet werden.
3. Die erfindungsgemäßen offenen CNTs werden direkt in Substanz als Feststoff oder in Dispersion auf die noch nicht mit einem Skiwachs beaufschlagten Gleitfläche eingerieben und/oder aufgepresst. Diese Beschichtung kann dann ebenfalls nochmals mechanisch bearbeitet werden. Auf diese so behandelte Gleitfläche kann eine weitere Lage eines flüssigen, pastösen, festen oder pulverförmigen Skiwachses aufgebracht werden, das ebenfalls die erfindungsgemäßen offenen CNTs beinhalten kann. Diese Beschichtung kann dann ebenfalls nochmals mechanisch bearbeitet werden.
4. Prinzipiell können auf Basis dieser Beispielen auch drei- und vierlagige Aufbauten erzeugt werden.

Mehrlagige Beschichtungsaufbauten von Skiwachsen haben zwar den Nachteil eines größeren Arbeitsbedarfs und verursachen höhere Materialkosten, im ambitionierten Freizeitsport und vor allem im Wettkampfsport spielen diese Faktoren jedoch eine sehr untergeordnete Rolle.

Die Vorteile von wenigstens zweilagigen Skiwachsaufbauten bestehen darin, dass die Grundschicht, die direkt auf die Gleitfläche des Wintersportgeräts aufgetragen wird, so konzipiert ist, dass eine hohe Haftung und eine große Eindringtiefe in die Poren der Gleitfläche erreicht werden kann. Oftmals werden daher für Grundschichtwachse Heißwachse oder speziell eingestellte Flüssigwachse eingesetzt. Heißwachse haben hier den Vorteil, dass durch die Wärme die Poren der Gleitfläche zusätzlich geöffnet werden und damit eine bessere Sättigung erreicht werden kann. Nachteilig ist, dass dies immer in einer Servicestation durchgeführt werden muss und nicht direkt am Hang oder in der Loipe. Mitunter besteht bei weniger geübten Personen die Gefahr, dass durch zu große Hitze die Gleitfläche beschädigt wird.

Werden pastöse oder flüssige Wachse als Grundwachse eingesetzt, so kann dies auch vor Ort ohne Inanspruchnahme einer Servicestation durchgeführt werden. Die Grundschicht muss bei einem mindestens zweilagigen Skiwachsaufbau nicht die bestmögliche Gleitfunktion gegenüber der Schneeoberfläche ausüben, da dies durch die auf die Grundschicht abgestimmte Deckschicht oder Deckschichten zum größten Teil übernommen wird. Daher kann ein mehrlagiger Skiwachsaufbau als ein Gradient verstanden werden, wobei die höchste Hydrophobie in der die Schneeoberfläche primär berührende Deckschicht zu finden ist und eine schwächere Hydrophobie in der Grundschicht, die direkt auf der Gleitfläche aufgetragen wurde. Eine Grundschicht kann neben der Verbesserung der Haftung der Gesamtbeschichtung auch als Depotschicht für die den Beschichtungsabschluß bildenden Deckschicht wirken, wobei sich die Deckschicht mit der bereits aufgetragenen Grundschicht zumindest teilweise vermischt und so die Dauergebrauchseigenschaften durch eine Depotfunktion verbessert. Die Deckschicht penetriert dabei zumindest partiell in die Grundschicht ein und verbleibt dadurch länger in der Gleitfläche des Wintersportgerätes. Grundschichten üben darüber hinaus eine Schutzfunktion für die Gleitfläche der Wintersportgeräte, um diese vor Oxidation oder Verschmutzung in anwendungsfreien Zeiten zu schützen.

Die erfindungsgemäßen offenen CNTs können durch die Wahl der übrigen Beschichtungskomponenten auch in Skiwachsen eingesetzt werden, die als sogenannte Steighilfen auf mindestens einem Teil der Gleitfläche des Wintersportgerätes gleitvermindemde Eigenschaften verleiht. Hier hat die Beschichtung von wenigstens eines Teils der Gleitfläche die Aufgabe, eine höhere Haftung und Griffigkeit auf der Schneeoberfläche zu erzeugen und das Bergaufsteigen zu beschleunigen. Hier dienen die erfindungsgemäßen offenen CNTs zur Verbesserung der Dauergebrauchseigenschaften und reduzieren die Anschmutzneigung der Steigzone durch Wachs- und/oder Klisterresten aus stark befahrenen Loipen.

Nimmt man die Bildung eines Schmelzwasserfilms als einen wichtigen Faktor für das Gleitvermögen eines Wintersportgerätes über Schnee an, dann besteht für bestmögliches Gleitvermögen die Aufgabe darin, je nach Witterungsbedingungen einen für den Gleitvorgang optimalen Wasserfilm unter der Gleitfläche zu erzeugen. Da dieser Wasserfilm jedoch weder zu dick noch zu dünn sein darf und seine Bildung von den Schnee- und Witterungsbedingungen abhängt, ist verständlich, dass neben sogenannten Universalwachsen, die bei mittlerer Leistungsfähigkeit einen weiten Bereich an Schneebedingungen abdecken, auch eine Vielzahl von Spezialwachsen angeboten werden, die auf spezielle Schneebedingungen empirisch optimiert worden sind. Im Leistungssport sind solche Spezialwachse unverzichtbar und daher sind eine Vielzahl von Zusammensetzungen für Skiwachse veröffentlicht worden. Diese beziehen sich nicht nur auf sehr unterschiedliche Bestandteile aus der organischen Chemie, sondern können auch verschiedene anorganische Bestandteile beinhalten, die der Gesamtmischung wiederum spezielle Eigenschaften verleiht.

So beschreibt CH 660 018 ein Skiwachs auf Basis von Paraffinwachs, das zusätzlich Russ und/oder Graphit enthält. Diese Zusätze erhöhen die elektrische Leitfähigkeit und in besonderem Maße die Wärmeleitfähigkeit des Skiwachses, so dass die durch die Gleitreibung entstehende elektrostatische Aufladung verhindert wird, die zu einem Anhaften eines unerwünscht dicken Schmelzwasserfilms führt. Die erhöhte Wärmeleitfähigkeit führt die durch die Gleitreibung erzeugte Wärme besser ab und verhindert auf diese Weise ebenfalls einen zu dicken Wasserfilm. In der Schrift werden jedoch keine Aussagen über die Dauergebrauchseigenschaften der Wachse gemacht und keine Vergleichsdaten hinsichtlich der Gleiteigenschaften gegenüber Zusammensetzungen ohne diese Zusatzstoffe genannt.

EP 0 421 303 beschreibt Gleitmittel, die fluorierte Komponenten mit Perfluoralkylgruppen und Methacrylsäureeinheiten aufweisen. Als wesentliche Komponente der Zubereitungen wird fluorierter Graphit zugesetzt, der dem Skiwachs höhere Härte, bessere Gleiteigenschaften und einen breiteren Einsatzbereich verleihen soll. Angaben über die Dauergebrauchsfähigkeit werden nicht gemacht.

EP 0 960 905 betrifft die Gleitfläche eines Wintersportgerätes aus Polyethylen, die Bemischungen von fluoriertem Graphit und Russ beinhaltet. Durch die damit verbundene höhere Wärmeleitfähigkeit der Gleitfläche wird ein zu dicker und damit gleitvermindernder Schmelzwasserfilm vermieden. Ein Skiwachs im Sinne dieser Erfindung wird nicht beschrieben.

DE 10 2006 047 302 nennt Nanokorund zur Verbesserung der tribologischen Eigenschaften von Gleitmitteln für Wintersportgeräten. Der Nanokorund wird zur besseren Disagglomerierung mit Silanen beschichtet. Es wird eine bessere Gleitwirkung und eine längere Gebrauchsdauer beobachtet.

WO 89 / 10950 beschreibt ein Skiwachs, das zur Verbesserung der Gleiteigenschaften und der Abriebfestigkeit Polytetrafluorethylenmikropulver als Komponente enthält. Das eingesetzte Mikropulver ist unter den Applikationsbedingungen als Gleitmittel für eine Gleitfläche eines Wintersportgerätes nicht schmelzbar und verbleibt als Korpuskel bestehen. Die Abriebfestigkeit und somit die Dauergebrauchsfähigkeit ist durch den dadurch mangelnden Verbund mit der Gleitfläche verbesserungswürdig.

WO 03/033608 beschreibt eine Mischung aus Paraffinwachs und einem korpuskularen Copolymeren aus Perfluoralkylvinylether und Tetrafluorethylen, bekannt als PFA. Hier wird das Paraffinwachs als Haftkomponente für das korpuskulare Perfluorcopolymer verwendet, um eine höhere Abriebbeständigkeit der Gleitmittelmischung auf der Gleitfläche des Wintersportgerätes zu ermöglichen.

EP 1 735 395 nennt hydropobierte Kieselsäure in Mischung mit Paraffinwachs als gleitverbessemde Komponente in Skiwachs. Durch den Zusatz der Kieselsäure wird der Abrieb des Skiwachses reduziert.

Die WO 99/50367 A 1 offenbart ein Skiwachs zum Auftragen auf die Lauffläche eines Skisportgerätes, welches als Kohlenstoffverbindung Fulleren beinhaltet, wodurch das Gleitmittel besonders gut an der bestrichenen Oberfläche haften soll.

Die DE 20 2006 008 755 U1 beschriebt einen Gleitbelag für Skier, dem Kohlenstoffnanoröhrchen zugesetzt sind, um eine Erhöhung der Festigkeit oder Wärmeleitfähigkeit des Skilaufsohlenbelags erzielen.

Aufgabe der vorliegenden Erfindung ist es daher, ein zum Stand der Technik gemäß der WO 99/50367 A1 und der DE 20 2006 008 755 U1 alternatives Gleitmittel sowie eine Verwendung eines solchen Gleitmittels und ein Verfahren Zur Modifikation der tribologischen Eigenschaften von Wintersportgeräten zur Verfügung zu stellen, wodurch Wintersportgeräte besonders gute Gleiteigenschaften aufweisen.

Gelöst wird diese Aufgabe durch ein Gleitmittel mit allen Merkmalen des Patentanspruchs 1, eine Verwendung allen Merkmalen des Patentanspruchs 5 und ein Verfahren allen Merkmalen des Patentanspruchs 11. Vorteilhafte Ausgestaltungen der Erfindung finden sich in den Unteransprüchen.

Die erfindungsgemäßen Kohtenstoff-Nanoröhrchen (CNT) können als ein- (SWCNT : single-wall carbon nanotubes) oder mehrwandige (MWCNT : multi-wall carbon nanotubes) Nanotubes vorliegen und weisen offene Röhren auf. Bei offene Röhren penetrieren Skiwachsbestandteile in das Innere der Röhren und erzeugen so einen innigen, nicht mehr auswaschbaren Verbund mit weiteren Skiwachskomponenten. Charakteristische Größen dieser offenen Nanotubes sind der Außendurchmesser, der den Durchmesser der Primärpartikel mit Bezug auf die äußerste Wand angibt und der Innendurchmesser, der als Bezugspunkt die innerste Wand hat.

Die eingesetzten offenen CNTs sind kommerziell erhältlich, z. B. Baytubes C 150P von Bayer MaterialScience. Hierbei handelt es sich um MWCNTs mit einem Außendurchmesser von ca. 14 nm und einem inneren Durchmesser um 4 nm. Die in Lieferform agglomerierten CNTs werden durch mechanische Verfahren, die dem Fachmann bekannt sind, in eine für die Anwendung als Wintersportgleitmittel geeignete mittlere Partikelgröße von maximal 20 µm, bevorzugt maximal 10 µm, besonders bevorzugt maximal 3 µm mittlere Partikelgröße zerkleinert. Dies kann durch Trocken- oder Nassvermahlung, Ultraschall oder Dispergieren in Flüssigkeiten oder Schmelzen erfolgen. Eine Kombination verschiedener Methoden ist ebenfalls möglich.

Die Zerkleinerung der Agglomerate der offenen CNTs für ihren Einsatz als Komponente in Skiwachsen kann separat oder in der Skiwachsmischung erfolgen. So können die offenen CNTs sowohl trocken als auch in einem flüssigen oder geschmolzenen Dispergiermittel zerkleinert werden. Werden die offenen CNTs durch eine trockene Mahlung disagglomeriert, kann dies auch in Gegenwart mindestens einer weiteren pulverförmigen organischen oder anorganischen Komponente erfolgen. Die so erhaltenen Pulver können an sich als Gleitkomponente für Wintersportgeräte Anwendung finden, hierbei ist eine Suspension vorteilhaft, als auch als Komponente in einer Skiwachsmischung.

Findet die Disagglomerierung in einer Flüssigkeit oder einer Schmelze statt, ist der Temperaturbereich, in dem die Disagglomerierung vorgenommen wird, abhängig vom Dispergiermittel. Bevorzugt findet die Disagglomerierung zwischen 0 - 150°C statt. Diese Dispergiermittel können sowohl anorganischer und/oder organischer Natur sein. Die so erhaltene Suspension wird entweder getrocknet und die offenen CNTs als Feststoff entweder an sich als Gleitkomponente eingesetzt oder als Bestandteil einer Skiwachsmischung weiterverarbeitet. Ebenfalls ist es möglich, die so erhaltene Dispersion als Skiwachs oder Teil eines Skiwachsautbaus zu verwenden.

Bevorzugt ist, die Zerkleinerung der offenen CNTs in einzelnen Komponenten der späteren Skiwachsmischung durchzuführen. Hierbei wird in den meisten Fällen eine Erhöhung der Viskosität der Dispersion beobachtet, die wahrscheinlich zum einen auf die Oberflächenbenetzung der offenen CNTs zurückzuführen ist, zum anderen sehr wahrscheinlich auch eine mindestens teilweise Penetrierung mindestens einer Komponent der späteren Skiwachsmischung in das Innere der Röhren stattfindet. Auf diese Weise können mehr oder weniger gefüllte offene CNTs hergestellt werden, die dann in einem folgenden Schritt entweder getrocknet werden und dann in Pulverform als Skiwachsbestandteil mit anderen Komponenten vermischt werden und die anwendungsbereite Skiwachsmischung bilden oder an sich als Gleitmittel eingesetzt werden. Bevorzugt ist, die Disagglomerierung der offenen CNTs in der Skiwachsmischung vorzunehmen und die disagglomerierten offenen CNTs nicht mehr aus der Mischung zu isolieren, sondern diese als Komponente in der Skiwachsmischung zu belassen. Diese bevorzugte Disagglomerierung der offenen CNTs direkt in der Skiwachsmischung als eine Komponente von mindestens zwei Komponenten, die durch dem Fachmann bekannte Dispergier- bzw. Mahlaggregate (z. B. Dispermat, Perlmühle, Turbomill, Ultra-Turrax) durchgeführt wird, bietet die Möglichkeit, durch die Wahl der Reihenfolge der Zugabe der offenen CNTs zu den weiteren Komponentenen der Skiwachsmischung Einfluß auf die Skiwachseigenschaften zu nehmen. Dieser überraschende Befund wird zur Zeit untersucht und kann gegenwärtig nur verstanden werden, wenn man annimmt, dass die mindestens teilweise Penetrierung von Skiwachskomponenten in das Innere der Röhre der offenen CNTs einen Einfluß auf die finalen Wachseigenschaften hat und diese Eigenschaften auch davon abhängen, welche Komponente oder Komponenten der Skiwachsmischung sich zumindest teilweise im Inneren der Röhren befindet. Nach den jetzigen Befunden wird davon ausgegangen, dass nach einer Penetration mindestens einer Skiwachskomponente in das Innere der Röhren der offenen CNTs die Hinzugabe einer weiteren Komponente keine Substitution der im Inneren der Röhre der offenen CNTs befindlichen Komponente durch die hinzugekommene Komponente in nennenswertem Ausmaß mehr stattfindet.

Diese Aussagen gelten sinngemäß auch für seitenwandfunktionalisierte offene CNTs. Beispiele für seitenwandfunktionalisierte CNTs können "Chemie in unserer Zeit", 2005, 39, Seiten 16-25, Wiley VCH Verlag, Weinheim, entnommen werden. Dies eröffnet die Möglichkeit, bei geeigneter Funktionalisierung der offenen CNTs chemische Bindungen mit mindestens einer weiteren Skiwachskomponente herzustellen.

Die erfindungsgemäßenoffenen CNTs lassen sich mit einer Vielzahl von Komponenten von Skiwachsmischungen kombinieren. Hierbei können sich mindestens eine der Skiwachskomponenten auf der Oberfläche der offenen CNTs, und/oder im Inneren der Röhre der offenen CNTs und/oder in dem umgebenden Medium befinden.

Die Komponenten einer Skiwachsmischung können verschiedenster chemischer Stoffklassen entnommen und anorganischer oder organischer Natur sein. Die folgende Aufzählung dient als Beispiel und limitiert den Einsatz der offenen CNTs nicht auf die genannten Komponenten.

Organische oligomere oder polymere Komponenten in fester, flüssiger oder geschmolzener Form :

Natürliche Wachse, Paraffine, modifizierte Paraffine, aliphatische Kohlenwasserstoffe, Aromaten, teil oder vollhalogenierte Kohlenstoffverbindungen, die auch Heteroatome in der Polymerhaupkette oder in den Seitenketten enthalten können. Ferner können Fettsäuren und deren Derivate, Siloxane, Silane, Urethane, Harnstoffe, Uretdione, Carbamate, Ester, Imine, Imide, Amine, Amide, Ether, Ketone, Aldehyde, Acrylate, Acetale, Lactone, Carbonsäuren, Alkohole, Anhydride oder Mischungen wenigstens zweier der genannten Komponenten verwendet werden. Als Derivate dieser Stoffe können auch teil- oder vollhalogeniert Typen eingesetzt werden.

Als Lösemittel können sowohl organische als auch anorganische Verbindungen eingesetzt werden :

Wasser, Alkohole, teil- oder vollfluorierte Kohlenstoffverbindungen, Aliphate, Aromate, organische oder anorganische Säuren oder Basen, Acetale, Ether, Ester, Ketone, Pyrrolidone, Lactone. Bevorzugt sind jene Lösemittel, die zum einen gesundheitlich unbedenklich sind und nur einen geringen VOC - Beitrag (volatile organic components) leisten.

Weiterhin können die Mischungen Viskositätsregler, Verlaufsmittel, Trockenhilfsstoffe, Anitoxidantien, UV-Stabilisatoren, Duft- und Farbstoffe sowie Antiabsetzmittel enthalten.

Zusätzlich zu den erfindungsgemäßen offenen CNTs können die Mischungen weitere anorganische Feststoffeenthalten, z. B. Siliciumdioxid, Siliciumcarbid, Aluminiumoxid, Ceroxid, Bornitrid, Ruß, Graphit, fluorierter Graphit, und Glimmer.

Vorteilhafterweise liegt die Anzahl der Röhrchenwände der offenen nanomeren Kohlenstoffröhrchen zwischen 1 und 25.

### Beispiele

### Beispiel 1

20,0g Microwachs Shell HMP (reines Kohlenwasserstoffwachs, Schmelzbereich um 74°C, Shell Deutschland Oil GmbH) werden zusammen mit 28,0g PE - Wachs S394 (Schmelzbereich um 94°C,
Shamrock Technologies, Inc.) bei ca. 110-120°C aufgeschmolzen und danach in 800ml Spezialbenzin (Siedebereich 100-140°C), das auf 80°C aufgeheizt wurde, eindispergiert. Es resultiert eine leicht gelbe, klare Lösung. Diese Lösung bildet Mischung 1a.

In 40g dieser Mischung 1a werden bei Raumtemperatur die folgenden Feststoffe unter Berücksichtigung der spezifischen Dichte der Feststoffe (Volumenaustausch) eindispergiert (Ultra-Turrax) :
Mischung 1b: 40g Mischung 1a + 0,44g Graphit UF2 (Graphitwerk Kropfmühle)
Mischung 1c: 40g Mischung 1a + 0,43g fluorierter Graphit (Verhältnis C : F = 1 : 1, Sigma)
Mischung 1d: 40g Mischung 1a + 0,40g Baytubes C150P, (Bayer Material Science)

Die abschließende Prüfung der Körnigkeit der jeweiligen Präparation mit einem Grindometer nach Hegman, DIN EN 21 524, ergibt eine maximale Partikelgröße der Agglomerate um 3-4 µm.

### Beispiel 2

33.6g PE - Wachs S394 (Shamrock Technologies, Inc.), 15,0g Microwachs Shell HMP (reines Kohlenwasserstoffwachs, Shell Deutschland Oil GmbH) und 0,7g PCS (teilfluoriertes Fettsäuresesterderivat, Clariant) werden bei ca. 120°C zusammen geschmolzen und nach der vollständigen Schmelze in 800ml Spezialbenzin (100-140°C) bei 80°C eingerührt. Es resultiert eine leicht gelbe, klare Lösung. Diese Lösung bildet Mischung 2a.

In 40g dieser Mischung 2a werden bei Raumtemperatur die folgenden Feststoffe unter Berücksichtigung der spezifischen Dichte der Feststoffe (Volumenaustausch) eindispergiert :
Mischung 2b: 40g Mischung 2a + 0,44g Graphit UF2 (Graphitwerk Kropfmühle)
Mischung 2c: 40g Mischung 2a + 0,43g fluorierter Graphit (Verhältnis C : F = 1 : 1, Sigma)
Mischung 2d: 40g Mischung 2a + 0,40g Baytubes C 150P (Bayer MaterialScience)

Grindometerprüfung entsprechend Beispiel 1 : Keine Präparation enthält agglomerierte Partikel größer 5 µm.

### Beispiel 3

2,0g Lupasol FG (Polyethylenimin, BASF) werden bei Raumtemperatur unter Rühren mit 100ml technischem Isopropanol versetzt und nach der vollständigen Lösung mit 6ml 30%iger wässriger Essigsäure angesäuert, pH der resultierenden Mischung um 5,2. 0,95g Dodecylbenzosulfonsäure - Na (Aldrich) werden in 35ml technischem Ethanol gelöst und mit der angesäuerten Lupasollösung bei Raumtemperatur unter Rühren vereinigt. Diese vereinigte Mischung wird mit technischem Isopropanol auf insgesamt 300ml aufgefüllt, danach werden noch 30ml Leitungswasser unter Rühren in dünnem Strahl zugegeben. Die Gesamtmischung wird 10min moderat gerührt. Es resultiert eine leicht gelbe, klare Lösung, Stammlösung 1.

200ml HFE7200 (Nonafluorisobutylether, Clariant) werden in einem Glaskolben vorgelegt, auf 40-50°C erwärmt und dann protionsweise (in diesem Falle 5 Portionen) mit insgesamt 16,0g Genolub PFF 1020p (Perfluoralkan, technische Mischung, Schmelzbereich 75-85°C, Clariant) unter Rühren versetzt.

Nach der letzten Zugabe wird noch 30 Minuten gerührt. Die nunmehr gelbe, klare Lösung wird auf Raumtemperatur abgekühlt, Stammlösung 2.

25ml der Stammlösung 1 und 25ml der Stammlösung 2 werden bei Raumtemperatur unter Rühren gemischt und bilden die Mischung 3a.

Zu 50ml Mischung 3a werden bei Raumtemperatur in einer ersten Mischung 0,22g Graphit UF2 (Mischung 3b), in einer weiteren Probe werden zu 50ml Mischung 3a 0,2g Baytubes C150P (Mischung 3c) zugegeben und jeweils mit dem Ultra-Turrax dispergiert.

Der Test mit dem Grindometer ergibt eine maximale Körnigkeit der Proben von 4 µm.

### Beispiel 4

40g Testbenzin (Siedebereich 100-140°C) werden bei Raumtemperatur vorgelegt und mit 0,44g Graphit UF2 unter dem Ultra-Turrax versetzt. Es wird 20min bei hoher Tourenzahl dispergiert, die Mischung wärmt sich dabei auf 40-45°C auf. Die anschließende Prüfung der Körnigkeit durch den Grindometertest zeigt eine maximale Körnigkeit im Bereich 3 - µm, Mischung 4a.

40g Testbenzin (Siedebereich 100-140°C) werden bei Raumtemperatur vorgelegt und mit 0,40g Baytubes C150P unter dem Ultra-Turrax versetzt. Es wird ebenfalls 20min bei hoher Tourenzahl dispergiert, auch hier erreicht die Mischung eine Temperatur um 45°C. Die anschließende Prüfung der Körnigkeit durch den Grindometertest zeigt eine maximale Körnigkeit im Bereich 4 - 6 µm, Mischung 4b.

17g Ethylacetat werden mit 17g Aceton vermischt und mit 0,44g Graphit UF2 versetzt. Es wird 20 Minuten mittels Ultra-Turrax dispergiert. Nun werden 2g Dynasylan F8263 (Fluoralkylsilanformulierung, anwendungsfertig, Evonik Degussa GmbH) unter Rühren zugetropft, anschließend noch 2g einer Mischung aus 10g Wasser und 10g technischer lsopropylalkohol. Diese Mischung wird 60 Minuten in einem Temperaturbereich um 40°C moderat gerührt. Auch hier zeigt die Grindometerprüfung eine maximale Körnigkeit um 5 µm, Mischung 4c.

17g Ethylacetat werden mit 17g Aceton vermischt und mit 0,4g Baytubes C150P versetzt. Es wird 20 Minuten mittels Ultra-Turrax dispergiert. Nun werden 2g Dynasylan F8263 unter Rühren zugetropft, anschließend noch 2g einer Mischung aus 10g Wasser und 10g technischer Isopropylalkohol. Diese Mischung wird 60 Minuten in einem Temperaturbereich um 40°C moderat gerührt. Die Grindometerprüfung zeigt eine maximale Körnigkeit um 4 µm, Mischung 4d.

Genolub PFF1020p aus Beispiel 3 wird in gelieferter Pulverform auf eine grundgewachste Skigleitfläche mittels Bügeleisen per Hand mit einer Eisentemperatur von 120-130°C zu einer durchgehenden Schicht mit leichtem Druck aufgeschmolzen. Hierbei werden ca. 2g Pulver pro Ski verbraucht. Nachdem Erkalten wird er weiße Belag mittels einer Nylonbürste (Borstendurchmesser 0,2mm, Borstenhöhe 8mm) ausgebürstet. Die dabei von der Skigleitfläche herausgebürsteten Wachsbestandteile liegen zunächst als lockeres Pulver auf der Skigleitfläche und können nach den dem Fachmann bekannten Methoden auf der Skigleitfläche verbleiben und werden dann nochmals mittels eines heißen Eisens aufgeschmolzen und erneut ausgebürstet oder können nach dem ersten Ausbürsten entfernt werden und die Gleitfläche des Wintersportgerätes wird mit einer zweiten Lage von Genolub PFF1020p beschichtet, deren Präparation der Präparation der ersten Lage entspricht.

In unserem Falle wird nur eine Lage Genolub PFF 1020p aufgetragen und ausgebürstet. Die ausgebürsteten Wachsbestandteile verbleiben auf der Skigleitfläche und werden nicht entfernt. Auf die so vorbereitete Skigleitflächen werden auf jeweils einem Paar Ski die Mischungen 4a-4d aufgesprüht, ca. 2 Minuten bei Raumtemperatur getrocknet und mittels Bügeleisen bei 120-130°C Eisentemperatur per Hand mit leichtem Druck in die vorhandene Lage Genolub PFF1020p eingeschmolzen. Für die Präparation der Vergleichsski ohne Graphit UF2 und Baytubes C150P werden die ausgebürsteten Wachsbestandteile erneut aufgeschmolzen und erneut ausgebürstet.

### Beispiel 5

400 ml Testbenzin (Siedebereich 100-140°C) werden bei Raumtemperatur vorgelegt und unter Rühren mit 17,6g fluoriertem Silikonwachs 23087VP (Wacker Chemie AG) und 18,4g PCS (teilfluoriertes Fettsäuresesterderivat, Clariant) versetzt. Die Zugabe von PCS erfolgte nach vollständiger Lösung des fluorierten Silikonwachses. Die Mischung wird insgesamt 30 Minuten gerührt. Es resultiert eine leicht gelbe, klare Lösung, Mischung 5a.

In 40g der Mischung 5a werden mittels Ultra-Turrax 0,2g Baytubes C 150P bei Raumtemperatur eindispergiert. Während der 20 minütigen Dispergierzeit erwärmte sich die Mischung auf 50°C. Der Grindometertest zeigt eine Körnigkeit der Probe von maximal 6 µm, Mischung 5b.

### Praktische Prüfungen

Für die praktischen Prüfungen standen 5 Paar gleiche Ski der Firma Fischer, Rennbelag Nr. 28, zur Verfügung. Die Skier wurden jeweils zuerst mit einer Feinstahlbürste ausgebürstet, dann mittels Wachsentferner (Zipps Wachsentferner citrus, Mischung aliphatischer Kohlenwasserstoffe mit Citrusaroma) gründlich gereinigt, um bei späteren Arbeitsschritten die Gefahr eines Schmutzeintrags in die Gleitfläche zu verhindern. Die so gereinigte Skigleitfläche, die aus ultrahochmolekularem Niederdruckpolyethylen besteht, ist oxidationsempfindlich. Daher wird die gereinigte Skigleitfläche mittels Heißwachs grundgewachst (Zipps MFW, PE-Wachs, Bügeltemperatur 120-130°C) und nach dem Auskühlen wird mit einer Klinge gleichmäßig abgezogen und durch eine Nylonbürste ausgebürstet, um die Schliffstruktur (linear) der Skigleitfläche abzubilden.

Sofern nicht anders angegeben, wurden die angegeben Mischungen auf die grundgewachsten Ski mittels Schwammaufträger oder mittels Sprühauftrag aufgebracht, etwa 2 Minuten bei Umgebungstemperatur getrocknet und eingekorkt (manuelles oder maschinelles Einpolieren der Skiwachsschicht auf die Skigleitfläche mittels eines Korkblocks oder eines Rotorkorks, empfohlene Drehzahl 800-1000 U/min, wobei durch den Druck und die Reibung Wärme erzeugt wird, die das Einpolieren unterstützt). Anschließend wird durch eine Nylonbürste die Schliffstruktur der Skigleitfläche wieder herausgearbeitet. Der Fahrer in der Messstrecke war bei jedem Versuch derselbe, die Langzeittests zur Ermittlung der Endzeiten wurden von mehreren Fahrern durchgeführt. Bei jedem Wechsel der Mischungen wurden die Skigleitflächen mit einer Stahlbürste ausgebürstet, dann mit Wachsentferner gründlich gereinigt, mit Grundwachs heißgewachst und mit einer Nylonbürste ausgebürstet.

Vor Testbeginn wurde ein Nulltest durchgeführt. Dies bedeutet, dass jeder Ski 5x in wechselnder Reihenfolge nur mit Grundwachs gefahren wurde (2 Kilometer) und die für jeden Ski ermittelte schnellste und langsamste Zeit in der Messstrecke gestrichen wurde, die 3 verbleibenden Zeiten wurden gemittelt. Da geringe Fertigungstoleranzen bei der Herstellung der Ski nicht zu vermeiden sind, ergeben sich bei diesem Test geringe Abweichungen, die bei ausgesuchten Wettkampfski um max. 1% liegen. Mit Bezug auf den schnellsten Ski wird für die 4 langsameren Ski ein Korrekturfaktor errechnet, um die etwas geringere Leistungsfähigkeit der betreffenden Ski zu erfassen und zu berücksichtigen. Auf diese Weise wird sichergestellt, dass nur die Leistungsfähigkeit des Wachses ermittelt wird. Dieses Verfahren ist dem Fachmann bekannt.

Startzeit bedeutet, dass alle Mischungen über eine Distanz von 2 Kilometer eingefahren wurden und dann die Zeitnahme mittels einer Lichtschranke auf einem separaten Trassenabschnitt mit definierter Länge und Gefälle vorgenommen wurde (Messstrecke).

Endzeit bedeutet, dass die Ski mit der jeweiligen Gleitmischung weitere 10 Kilometer gefahren wurden und dann ebenfalls die Zeitnahme wie bei der Startzeit erfolgte.

Als Kriterium für die Haltbarkeit der Gleitmischung dient die Differenz zwischen Endzeit - Startzeit in Sekunden.

### Prüfergebnisse für Beispiel 1, Mischungen 1a - 1d

Verschmutzer Schnee, grobkörniger Altschnee, extrem weiche Trasse, bedeckter Himmel, Lufttemperatur 5-6°C, Luftfeuchtigkeit 94-98%, Schneetemperatur um 0°C, Schneefeuchtigkeit 99,9%

| | Startzeit | Endzeit | Differenz Endzeit - Startzeit |
|---|---|---|---|
| Mischung 1a | 10,70s | 11,02s | + 0,32s |
| Mischung 1b | 10,51s | 10,88s | + 0,37s |
| Mischung 1c | 10,66s | 10,71s s | + 0,05s |
| Mischung 1d | 10,52s | 10,56s | + 0,04s |

### Ergebnis:

Mischung 1a ohne eine Beimischung von Graphit, fluoriertem Graphit oder CNT liegt sowohl in der Startzeit als auch in der Endzeit an letzter Stelle. Die Differenz zwischen Endzeit und Startzeit ist zudem hoch, so dass insgesamt eine schlechte Gleitwirkung festgestellt wird.

Mischung 1b mit Graphit UF2 zeigt die beste Startzeit, zeigt aber in der Differenz Endzeit - Startzeit den größten und damit schlechtesten Wert. Die Haltbarkeit der Gleitmittelmischung ist nicht ausreichend.

Mischung 1c mit fluoriertem Graphit erreicht eine sehr geringe Differenz Endzeit - Startzeit, die Mischung benötigt jedoch eine längere Phase, um gute Gleitwirkung bereitzustellen, da die Startzeit zu gering ist.

Mischung 1d mit Baytubes C150P zeigt eine sehr gute Startzeit, die Differenz zwischen Endzeit und Startzeit ist die niedrigste in dieser Testreihe, Insgesamt zeigt Mischung 4d den besten Kompromiß hinsichtlich schneller Startzeit und langer Haltbarkeit (niedrigste Endzeit).

### Prüfergebnisse für Beispiel 2, Mischungen 2a - 2d

Stark verschmutzer Schnee, grobkörniger Altschnee, extrem weiche Trasse, sonnig, Lufttemperatur 7-8°C, Luftfeuchte 70-80%, Schneetemperatur -0,5-0°C, Schneefeuchtigkeit um 80%

| | Startzeit | Endzeit | Differenz Endzeit - Startzeit |
|---|---|---|---|
| Mischung 2a | 10,46s | 10,54S | + 0,08s |
| Mischung 2b | 10,52s | 10,62s | + 0,10s |
| Mischung 2c | 10,40s | 10,47s | + 0,07s |
| Mischung 2d | 10,33s | 10,41s | + 0,08s |

### Ergebnis:

Mischung 2a ohne eine Beimischung von Graphit, fluoriertem Graphit oder CNT liegt sowohl bei der Startzeit als auch in der Differenz Endzeit - Startzeit im Mittelfeld.

Mischung 2b mit Graphit UF2 zeigt hier die schlechtesten Werte der Testreihe,

Mischung 2c mit fluoriertem Graphit kann gegenüber Mischung 2a sowohl eine bessere Startzeit als auch eine geringere Differenz Endzeit -Startzeit vorweisen.

Auch in dieser Testreihe zeigt Mischung 2d mit Baytubes C 150P einen sehr guten Kompromiß zwischen Startzeit und der Differenz Endzeit - Startzeit. Mischung 2d stellt sehr schnell sehr gute Gleiteigenschaften zur Verfügung, die sich auch nach 10km in der Endzeit nicht wesentlich verschlechtert haben und die besten Start- und Endzeiten dieser Testreihe bereitstellen.

### Prüfergebnisse für Beispiel 3, Mischungen 3a - 3c

Extrem schmutziger Schnee, sehr grobkörniger Altschnee, extrem weiche und tiefe Trasse, sonnig, Lufttemperatur um 10°C, Luftfeuchte um 68%, Schneetemperatur -0,4 - 0°C, Schneefeuchte 95%

| | Startzeit | Endzeit | Differenz Endzeit - Startzeit |
|---|---|---|---|
| Mischung 3a l | 0,35s | 11,08s | + 0,73s |
| Mischung 3b | 10,34s | 10,96s | + 0,62s |
| Mischung 3c | 10,29s | 10,72s | + 0,43s |

### Ergebnis:

Mischung 3a ohne Graphit UF2 oder Baytubes C150P zeigt sowohl die langsamste Startzeit als auch die größte Differenz Endzeit - Startzeit.

Mischung 3c mit Baytubes C150P liefert sowohl die schnellste Startzeit als auch die geringste Zeitdifferenz Endzeit - Startzeit.

### Prüfergebnisse für Beispiel 4, Mischungen 4a-4d und Genolub PFF1020p

Sauberer Neuschnee, feinkörnig, aggressiv, feucht, feste bis harte Trasse, frisch präpariert, bewölkt, Lufttemperatur- 0,2°C, Luftfeuchte um 80%, Schneetemperatur um -3°C, Schneefeuchte um 90%

Abweichend von den seither angewandten Testbedingungen wird hier die Endzeit nach 20km Laufstrecke bestimmt.

| | Startzeit | Endzeit | Differenz Endzeit - Startzeit |
|---|---|---|---|
| Mischung 4a | 9,95s | 11,38s | + 1,43s |
| Mischung 4b | 10,10s | 11,22s | + 1,12s |
| Mischung 4c | 9,93s | 11,19s | + 1,26s |
| Mischung 4d | 9,96s | 11,05s | + 1,09s |
| Genolub PFF 1020p | 9,98s | 11,34s | + 1,36s |

### Ergebnis:

Mischungen 4c und 4d, die Graphit UF2 bzw. Baytubes C150P beinhalten, die mit Fluoralkylsilan vorbehandelt wurden, zeigen die schnellsten Startzeiten und die geringste Differenz Endzeit - Startzeit. Da die Schneebedingungen einen höheren Abrieb des Gleitmittels von der Skigleitfläche erwarten lassen, verwundert es nicht, dass Genolub PFF1020p einen höheren Wert in der Differenz Endzeit- Startzeit aufweist, während wir uns die geringeren Differenzen der Mischungen 4b - 4d durch einen geringeren Abtrag von der Skigleitfläche während des Tests erklären. Möglicherweise spielt auch eine wahrscheinlich bessere
Wärmeleitung der Mischungen 4a-4d eine Rolle, die einen optimaleren Schmelzwasserfilm unter der Skigleitfläche erzeugen, möglicherweise findet auch eine geringere elektrostatische Aufladung der Wintersportgeräte, bedingt durch die Gleitreibung, statt. Es wäre ebenfalls denkbar, dass durch den Einsatz der offenen CNTs die Skiwachse eine leicht unebene, mit Erhebungen und Tälern versehene Oberfläche ausbilden, die ähnlich dem "Lotuseffekt" die Kontaktfläche der Gleitfläche der Wintersportgeräte gegenüber der Schneeoberfläche verringern und so eine bessere Gleitwirkung erzielen.

Prüfergebnisse für Beispiel 5, Mischungen 5a und 5b sowie als Vergleich Mischungen 2a und 2d

Kunstschnee in Skihalle, sauber, mittleres Korn, feucht, feste Trasse, Lufttemperatur -2,0°C, Luftfeuchte 94%, Schneetemperatur -3,6°C, Schneefeuchte um 90%

Die Endzeit wurde nach einer Laufstrecke von 6 Kilometer bestimmt.

| | Startzeit | Endzeit | Differenz Endzeit - Startzeit |
|---|---|---|---|
| Mischung 2a | 10,60s | 10,37s | - 0,23s |
| Mischung 2d | 10,57s | 10,28s | - 0,29s |
| Mischung 5a | 10,58s | 10,30s | - 0,28s |
| Mischung 5b | 10,54s | 10,25s | - 0,29s |

### Ergebnis:

Die Ergebnisse sind für Kunstschnee unter Hallenbedingungen nicht unüblich und dem Fachmann bekannt. Unter Hallenbedingungen ist der Schnee sehr sauber und weitestgehend frei von Staub und sonstigen Verunreingungen durch den Untergrund. Die schnelleren Endzeiten ergeben sich aus der gewählten Laufstrecke, da unter diesen Bedingungen die Schliffstruktur optimal eingefahren ist und noch kein nennenswerter Abrieb des Skiwachses von der Gleitfläche des Wintersportgerätes eingetreten ist. Auch unter diesen Bedingungen zeigen die Mischungen 2d und 5b, die Baytubes C150P beinhalten, die schnellsten Start- und Endzeiten sowie die größte Differenz Endzeit - Startzeit.

Dies zeigt, dass der Einsatz von offenen CNTs unter verschiedenen Bedingungen überraschenderweise eine Verbesserung der tribologischen Gleiteigenschaften der Wintersportgeräte bewirkt und somit den Einsatzbereich der Skiwachsmischungen vergrößert.

## Patentansprüche

1. Skiwachs für Wintersportgeräte, das nanomere Kohlenstoffröhrchen (carbon nanotubes) beinhaltet, **dadurch gekennzeichnet, dass** die nanomeren Kohlenstoffröhrchen als offene nanomere Kohlenstoffröhrchen ausgebildet sind.

2. Skiwachs nach Anspruch 1, **dadurch gekennzeichnet, dass** die Primärteilchen der offenen nanomeren Kohlenstoffröhrchen ein Verhältnis von mittlerem Außendurchmesser zu mittlerem Innendurchmesser bis zu 50 : 1 , bevorzugt höchstens 30 : 1, aufweisen.

3. Skiwachs nach Ansprüche 1 und 2, **dadurch gekennzeichnet, dass** die Anzahl der Röhrchenwände der offenen nanomeren Kohlenstoffröhrchen 1 bis 25 beträgt.

4. Skiwachs nach einem der Ansprüche 1 bis 3, wobei die offenen nanomeren Kohlenstoffröhrchen funktionelle Gruppen in mindestens einer Seitenwand aufweisen.

5. Verwendung von offenen nanomeren Kohlenstoffröhrchen zur Modifikation der tribologischen Gleiteigenschaften von Wintersportgeräten auf Schnee.

6. Verwendung nach Anspruch 5, **dadurch gekennzeichnet, dass** die offenen nanomeren Kohlenstoffröhrchen auf ein mit einer Gleitmittelmischung vorbehandeltes Wintersportgerät aufgebracht werden.

7. Verwendung nach einem der Ansprüche 5 bis 6, **dadurch gekennzeichnet, dass** die offenen nanomeren Kohlenstoffröhrchen mit einer Gleitmittelmischung gemischt und anschließend auf ein Wintersportgerät aufgebracht werden.

8. Verwendung nach einem der Ansprüche 5 bis 7, **dadurch gekennzeichnet, dass** die Primärteilchen der offenen Kohlenstoffröhrchen ein Verhältnis von mittlerem Außendurchmesser zu mittlerem Innendurchmesser bis zu 50 : 1, bevorzugt höchstens 30: 1 aufweisen.

9. Verwendung nach einem der Ansprüche 5 bis 8, **dadurch gekennzeichnet, dass** die Anzahl der Röhrchenwände der offenen nanomeren Kohlenstoffröhrchen 1 bis 25 beträgt.

10. Verwendung nach einem der Ansprüche 5 bis 9, **dadurch gekennzeichnet, dass** die offenen nanomeren Kohlenstoffröhrchen in einer Gleitmittelmischung in einem Gewichtsanteil von 0,1 - 99,9% bezüglich des Feststoffes der Mischung vorliegen.

11. Verfahren zur Modifikation der tribologischen Gleiteigenschaften von Wintersportgeräten auf Schnee, **dadurch gekennzeichnet, dass** offene nanomere Kohlenstoffröhrchen auf ein mit einem Gleitmittel vorbehandeltes Wintersportgerät aufgebracht werden.

12. Verfahren zur Modifikation der tribologischen Gleiteigenschaften von Wintersportgeräten auf Schnee, **dadurch gekennzeichnet, dass** offene nanomere Kohlenstoffröhrchen mit einem Gleitmittel gemischt und anschließend auf das Wintersportgerät aufgebracht werden.

13. Verfahren nach Anspruch 11 oder 12, **dadurch gekennzeichnet, dass** die Primärteilchen der offenen nanomeren Kohlenstoffröhrchen ein Verhältnis von mittlerem Außendurchmesser zu mittlerem Innendurchmesser bis zu 50: 1, bevorzugt höchstens 30 : 1, aufweisen.

14. Verfahren nach einem der Ansprüche 11 bis 13, **dadurch gekennzeichnet, dass** die Anzahl der Röhrchenwände der offenen nanomeren Kohlenstoffröhrchen 1 bis 25 beträgt.

15. Verfahren nach einem der Ansprüche 11 bis 14, **dadurch gekennzeichnet, dass** die offenen nanomeren Kohlenstoffröhrchen in einer Gleitmittelmischung in einem Gewichtsanteil von 0,1 - 99,9% bezüglich des Feststoffes der Mischung vorliegen.

## Claims

1. Ski wax for winter sports equipment, said wax comprising carbon nanotubes (nanomeric carbon tubules), **characterized in that** the carbon nanotubes take the form of open carbon nanotubes.

2. Ski wax according to Claim 1, **characterized in that** the primary particles of the open carbon nanotubes have a ratio of average outer diameter to average inner diameter of up to 50:1, preferably not more than 30:1.

3. Ski wax according to Claims 1 and 2, **characterized in that** the number of tube walls of the open carbon nanotubes is 1 to 25.

4. Ski wax according to any of Claims 1 to 3, wherein the open carbon nanotubes have functional groups in at least one side wall.

5. Use of open carbon nanotubes for modifying the tribological lubricity properties of winter sports equipment on snow.

6. Use according to Claim 5, **characterized in that** the open carbon nanotubes are applied to winter sports equipment pretreated with a lubricant mixture.

7. Use according to either of Claims 5 and 6, **characterized in that** the open carbon nanotubes are mixed with a lubricant mixture and then applied to winter sports equipment.

8. Use according to any of Claims 5 to 7, **characterized in that** the primary particles of the open carbon nanotubes have a ratio of average outer diameter to average inner diameter of up to 50:1, preferably not more than 30:1.

9. Use according to any of Claims 5 to 8, **characterized in that** the number of tube walls of the open carbon nanotubes is 1 to 25.

10. Use according to any of Claims 5 to 9, **characterized in that** the open carbon nanotubes are present in a lubricant mixture in a weight fraction of 0.1 - 99.9% based on the solids of the mixture.

11. Method for modifying the tribological lubricity properties of winter sports equipment on snow, **characterized in that** open carbon nanotubes are applied to winter sports equipment pretreated with a lubricant.

12. Method for modifying the tribological lubricity properties of winter sports equipment on snow, **characterized in that** open carbon nanotubes are mixed with a lubricant and then applied to the winter sports equipment.

13. Method according to Claim 11 or 12, **characterized in that** the primary particles of the open carbon nanotubes have a ratio of average outer diameter to average inner diameter of up to 50:1, preferably not more than 30:1.

14. Method according to any of Claims 11 to 13, **characterized in that** the number of tube walls of the open carbon nanotubes is 1 to 25.

15. Method according to any of Claims 11 to 14, **characterized in that** the open carbon nanotubes are present in a lubricant mixture in a weight fraction of 0.1 - 99.9% based on the solids of the mixture.

## Revendications

1. Fart à ski pour appareils de sports d'hiver, qui contient des nanotubes de carbone,
**caractérisé en ce que**
les nanotubes de carbone sont configurés comme nanotubes de carbone ouverts.

2. Fart à ski selon la revendication 1, **caractérisé en ce que** les particules primaires des nanotubes de carbone ouverts présentent un rapport entre le diamètre extérieur moyen et le diamètre intérieur moyen qui peut aller jusqu'à 50:1 et qui est de préférence d'au plus 30:1.

3. Fart à ski selon les revendications 1 ou 2, **caractérisé en ce que** le nombre des parois des nanotubes de carbone ouverts est de 1 à 25.

4. Fart à ski selon l'une des revendications 1 à 3, dans lequel les nanotubes de carbone ouverts présentent des groupes fonctionnels dans au moins une paroi latérale.

5. Utilisation de nanotubes de carbone ouverts pour modifier les propriétés tribologiques de glissement d'appareils de sports d'hiver sur la neige.

6. Utilisation selon la revendication 5, **caractérisée en ce que** les nanotubes de carbone ouverts sont appliqués sur un appareil de sports d'hiver prétraité à l'aide d'un mélange de lubrifiants.

7. Utilisation selon l'une des revendications 5 et 6, **caractérisée en ce que** les nanotubes de carbone ouverts sont mélangés avec un mélange de lubrifiants et ensuite appliqués sur un appareil de sports d'hiver.

8. Utilisation selon l'une des revendications 5 à 7, **caractérisée en ce que** les particules primaires des nanotubes de carbone ouverts présentent un rapport entre le diamètre extérieur moyen et le diamètre intérieur moyen qui peut aller jusqu'à 50:1 et qui est de préférence d'au plus 30:1.

9. Utilisation selon l'une des revendications 5 à 8, **caractérisée en ce que** le nombre des parois des nanotubes de carbone ouverts est de 1 à 25.

10. Utilisation selon l'une des revendications 5 à 9, **caractérisée en ce que** les nanotubes de carbone ouverts se présentent dans un mélange de lubrifiants à une fraction pondérale de 0,1 à 99,9 % par rapport aux solides du mélange.

11. Procédé de modification des propriétés tribologiques de glissement d'appareils de sports d'hiver sur la neige, **caractérisé en ce que** des nanotubes de carbone ouverts sont appliqués sur un appareil de sports d'hiver prétraité à l'aide d'un lubrifiant.

12. Procédé de modification des propriétés tribologiques de glissement d'appareils de sports d'hiver sur la neige, **caractérisé en ce que** des nanotubes de carbone ouverts sont mélangés avec un lubrifiant et ensuite appliqués sur l'appareil de sports d'hiver.

13. Procédé selon la revendication 11 ou 12, **caractérisé en ce que** les particules primaires des nanotubes de carbone ouverts présentent un rapport entre le diamètre extérieur moyen et le diamètre intérieur moyen qui peut aller jusqu'à 50:1 et qui est de préférence d'au plus 30:1.

14. Procédé selon l'une des revendications 11 à 13, **caractérisé en ce que** le nombre des parois des nanotubes de carbone ouverts est de 1 à 25.

15. Procédé selon l'une des revendications 11 à 14, **caractérisé en ce que** les nanotubes de carbone ouverts se présentent dans un mélange de lubrifiants à une fraction pondérale de 0,1 à 99,9 % par rapport aux solides du mélange.
